# EUROPÄISCHE PATENTSCHRIFT

(11) **EP 2 852 635 B1**
(45) Veröffentlichungstag und Bekanntmachung des Hinweises auf die Patenterteilung: **26.08.2020**
(21) Anmeldenummer: 13725618.6
(22) Anmeldetag: 23.05.2013
(51) Int. Cl.: C09K 3/10, C08G 18/46, C08G 18/10, C08G 18/75, C08L 101/10, C08G 18/48

(54) **ZUSAMMENSETZUNG AUF BASIS SILANTERMINIERTER POLYMERE, WELCHE BEI DER AUSHÄRTUNG KEIN METHANOL ABSPALTET**
COMPOSITION BASED ON SILANE-TERMINATED POLYMERS THAT DOES NOT SPLIT OFF METHANOL DURING CURING
COMPOSITION À BASE DE POLYMÈRES À TERMINAISON SILANE NE DÉGAGEANT PAS DE MÉTHANOL LORS DU DURCISSEMENT

(30) Priorität: 23.05.2012 EP 12169153
(43) Veröffentlichungstag der Anmeldung: 01.04.2015
(73) Patentinhaber: Sika Technology AG, 6340 Baar (CH)
(72) Erfinder: CHOFFAT, Fabien, CH-4522 Rüttenen (CH); NESTLER, Manuel, CH-8610 Uster (CH)
(74) Vertreter: Sika Patent Attorneys
(86) Internationale Anmeldenummer: PCT/EP2013/060657
(87) Internationale Veröffentlichungsnummer: WO 2013/174940

(56) Entgegenhaltungen:
- EP-A1- 1 990 371
- EP-A1- 2 336 210
- WO-A1-2009/133062

## Beschreibung

### Technisches Gebiet

Die vorliegende Erfindung betrifft das Gebiet der elastischen Klebstoffe, Dichtstoffe und Beschichtungen auf Basis silanfunktioneller Polymere.

### Stand der Technik

Zusammensetzungen auf Basis silanfunktioneller Polymere und deren Verwendung als Klebstoffe, Dichtstoffe oder Beschichtungen sind seit längerem bekannt und vielfach beschrieben. Als silanfunktionelle Polymere kommen dabei Polymere, welche mit verschiedenen feuchtigkeitsreaktiven Silangruppen versehen sind, zum Einsatz. Wesentliches Kriterium für die Auswahl der Silangruppen ist dabei die Reaktivität dieser Gruppen. Durch die Reaktivität der Silangruppen wird schliesslich die Aushärtungsgeschwindigkeit der Zusammensetzung massgeblich beeinflusst.

Besonders gute Reaktivitäten werden bekanntermassen mit zwei Systemen erzielt. Das sind einerseits Zusammensetzungen auf Basis von Methoxysilan terminierten Polymeren, andererseits solche auf Basis von α-Silan terminierten Polymeren. Letztere sind wiederum besonders reaktiv, wenn sie Methoxygruppen aufweisen.

Der Nachteil des Einsatzes von Methoxysilan terminierten Polymeren ist, dass sie bei der Vernetzung mit Wasser Methanol freisetzen. Insbesondere beim Einsatz in Innenräumen ist die Freisetzung von Methanol problematisch, da Methanol und vor allem seine Metaboliten für den Menschen giftig sind und zu unerwünschten Wirkungen führen können.

Ein weiterer Nachteil von Methoxysilan terminierten Polymeren ist, dass sie bevorzugt mit Hilfe von organischen Zinnverbindungen ausgehärtet werden, welche wiederum aus ökologischen und toxikologischen Gründen nicht für jede Verwendungsart geeignet sind.

Der Nachteil von α-Silan terminierten Polymeren ist, dass sie sehr aufwendig herzustellen sind und somit kommerziell nicht verfügbar oder zu teuer sind.

### Darstellung der Erfindung

Aufgabe der vorliegenden Erfindung ist es daher, eine Zusammensetzungen auf Basis silanfunktioneller Polymere zur Verfügung zu stellen, welche die Nachteile des Stand der Technik überwindet und ohne Zinn oder organische Zinnverbindungen und ohne die Freisetzung von Methanol vollständig aushärtet.

Überaschenderweise wurde nun gefunden, dass Zusammensetzungen gemäss Anspruch 1 diese Aufgabe lösen.

Die Kombination von spezifischen Katalysatoren mit Verbindungen, welche mindestens eine Amidinogruppe aufweisen führt dazu, dass Zusammensetzungen auf Basis silanfunktioneller Polymere mit Alkoxy-Endgruppen, welche keine Methoxygruppen sind, vollständig aushärten, dabei kein Methanol freisetzen und gänzlich oder im Wesentlichen frei von Zinn oder organischen Zinnverbindungen sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Zusammensetzung gemäss Anspruch 1.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen). Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Die Begriffe "Organotitanat", "Organozirconat" und "Organoaluminat" bezeichnen im vorliegenden Dokument Verbindungen, welche mindestens einen über ein Sauerstoffatom an das Titan-, Zirconium- bzw. Aluminiumatom gebundenen Liganden aufweisen.

Als "mehrzähniger Ligand" bzw. "Chelatligand" wird im vorliegenden Dokument ein Ligand verstanden, welcher mindestens zwei freie Elektronenpaare besitzt und mindestens zwei Koordinationsstellen des Zentralatoms besetzen kann. Ein zweizähniger Ligand vermag es entsprechend zwei Koordinationsstellen eines Zentralatoms zu besetzen.

Unter der "Molekulargewicht" versteht man im vorliegenden Dokument stets das Molekulargewichtsmittel Mₙ (Zahlenmittel).

Die erfindungsgemässe Zusammensetzung enthält mindestens ein silanfunktionelles Polymer **P** mit Alkoxy-Endgruppen, welche keine Methoxygruppen sind, wobei diese Endgruppen Endgruppen der Formel (I) sind.

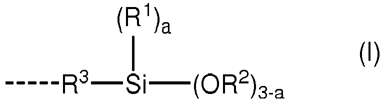

Dabei steht der Rest R¹ für eine Alkylgruppe mit 1 bis 8 C-Atomen, insbesondere für eine Methyl- oder für eine Ethylgruppe.

Der Rest R² steht für eine Alkylgruppe mit 2 bis 12 C-Atomen, insbesondere für eine Alkylgruppe mit 2 bis 8 C-Atomen, bevorzugt für eine Ethyl- oder für eine Isopropylgruppe.

Der Rest R³ steht für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, insbesondere mit einem oder mehreren Stickstoffatomen.

Der Index a steht für einen Wert von 0 oder 1 oder 2, insbesondere für einen Wert von 0.

Meist bevorzugt handelt es sich beim Rest R² um eine Ethylgruppe, das heisst also, dass in der erfindungsgemässen Zusammensetzung wie sie vorhergehend beschrieben worden ist, die Alkoxy-Endgruppen des silanfunktionellen Polymers **P** Ethoxygruppen sind.

Der Vorteil von silanfunktionellen Polymeren, welche als Alkoxy-Endgruppen Ethoxygruppen aufweisen ist, dass bei der Vernetzung mit Wasser Ethanol freigesetzt wird, wodurch die Zusammensetzungen aus ökologischer und toxikologischer Sicht unbedenklich sind.

Innerhalb einer Silangruppe der Formel (I) stehen R¹ und R² jeweils unabhängig voneinander für die beschriebenen Reste. So sind beispielsweise auch Verbindungen der Formel (I) möglich, welche Diethoxy-isopropoxysilane (R² = Ethyl, R² = Ethyl, R² = Isopropyl) darstellen.

In einer ersten Ausführungsform ist das silanfunktionelle Polymer **P** ein silanfunktionelles Polyurethanpolymer **P1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist. In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan **AS** der Formel (II), 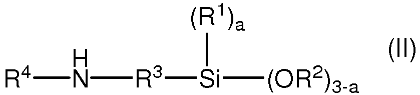 wobei R¹, R², R³ und a bereits vorhergehend beschrieben worden sind und R⁴ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (III) steht. 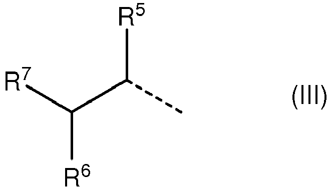 Dabei stehen die Reste R⁵ und R⁶ jeweils unabhängig voneinander für ein Wasserstoffatom oder für einen Rest aus der Gruppe bestehend aus -R⁸, -COOR⁸ und -CN.

Der Rest R⁷ steht für ein Wasserstoffatom oder für einen Rest aus der Gruppe bestehend aus -CH₂-COOR⁸, -COOR⁸, -CONHR⁸, -CON(R⁸)₂, -CN, -NO₂, -PO(OR⁸)₂, -SO₂R⁸ und -SO₂OR⁸.

Der Rest R⁸ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltriethoxysilan, 3-Aminopropyldiethoxymethylsilan; sekundäre Aminosilane wie N-Butyl-3-aminopropyltriethoxysilan, N-Phenyl-3-aminopropyltriethoxysilan; die Produkte aus der Michael-artigen Addition von primären Aminosilanen wie 3-Aminopropyltriethoxysilan oder 3-Aminopropyldiethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Triethoxysilyl-propyl)-amino-bernsteinsäuredimethyl- und -diethylester; sowie Analoga der genannten Aminosilane mit Isopropoxy-, n-Propoxy- sowie entsprechenden Butoxy-, Pentoxy- Hexoxy- Heptoxy- und Octoxygruppen anstelle der Ethoxygruppen am Silicium. Als Aminosilane **AS** besonders geeignet sind sekundäre Aminosilane, insbesondere Aminosilane **AS,** bei denen R⁴ in Formel (II) verschieden von H ist. Bevorzugt sind die Michael-artigen Addukte, insbesondere N-(3-Triethoxysilyl-propyl)-amino-bernsteinsäurediethylester. Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Aminosilane, eignen sich weiterhin insbesondere auch solche, wie sie erhältlich sind aus der Reaktion eines N-Aminoethyl-aminoalkyltrialkoxysilans, wobei die Alkoxy-Endgruppen keine Methoxygruppen sind, mit einem Malein- oder Fumarsäurediester. Derartige geeignete Aminosilane sind beispielsweise beschrieben in WO 01/00632.

Mit entsprechenden Aminosilanen hergestellte silanterminierte Polyurethanpolymere sind beispielsweise beschrieben in der europäischen Patentanmeldung mit der Anmeldenummer EP2221331.

Für die vorliegende Erfindung ungeeignet sind die in den erwähnten Dokumenten beschriebenen Methoxysilangruppen aufweisenden Aminosilane bzw. silanterminierte Polyurethanpolymere.

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1 '000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® (früher Hycar®) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20 °C bis 100 °C, gegebenenfalls unter Mitverwendung von Katalysatoren.

Als Isocyanatosilan **IS** geeignet sind Verbindungen der Formel (IV).

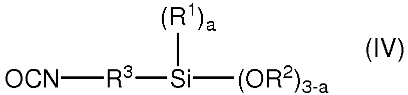

Dabei sind R¹, R², R³ und a bereits vorhergehend beschrieben worden. Beispiele für geeignete Isocyanatosilane **IS** der Formel (IV) sind Isocyanatomethyltriethoxysilan, Isocyanatomethyldiethoxymethylsilan 3-Isocyanatopropyltriethoxysilan, 3-Isocyanatopropyldiethoxymethylsilan, und deren Analoga mit Isopropoxygruppen anstelle der Ethoxygruppen am Silicium. Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol. Andererseits eignen sich auch Hydroxylgruppen aufweisende, insbesondere Hydroxylgruppen terminierte, Polyurethanpolymere zur Umsetzung mit Isocyanatosilanen **IS** der Formel (IV). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen Silquest® A-Link Silane von der Firma Momentive Performance Materials Inc., USA.

In einer dritten Ausführungsform ist das silanfunktionelle Polymer **P** ein silanfunktionelles Polymer **P3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766.

Für die vorliegende Erfindung ungeeignet sind die in den erwähnten Dokumenten beschriebenen Methoxysilangruppen aufweisenden silanterminierte Polymere.

Bevorzugt handelt es sich beim silanfunktionellen Polymer **P** um ein silanfunktionelles Polymer **P1** oder **P2,** insbesondere **P1.**

Gegenüber den silanfunktionelles Polymeren **P3** weisen silanfunktionelle Polymere **P1** und **P2** den Vorteil auf, dass sie reaktiver sind und somit schneller vernetzen. Ein weiterer Vorteil liegt darin, dass sie verbesserte mechanische Eingeschaften aufweisen, welche mit denen von klassischen Polyurethanzusammensetzungen vergleichbar sind. Weiterhin weisen sie eine geringere Tendenz zu Kriechverhalten auf und ein verbessertes Rückstellvermögen. Diese Eigenschaften sind besonders ausgeprägt bei silanfunktionellen Polymern **P1,** wodurch diese meist bevorzugt sind. Durch die Gesamtheit dieser Eigenschaften, eignen sich bevorzugte Zusammensetzungen insbesondere für den Einsatz in Fugen, beispielsweise in Dilatationsfugen.

Üblicherweise ist das silanfunktionelle Polymer **P** in einer Menge von 10 bis 80 Gew.-%, insbesondere in einer Menge von 15 bis 50 Gew.-%, bevorzugt 20 bis 40 Gew.-%, bezogen auf die gesamte Zusammensetzung, vorhanden.

Weiterhin umfasst die erfindungsgemässe Zusammensetzung mindestens einen Katalysator für die Vernetzung von silanfunktionellen Polymeren, ausgewählt aus der Gruppe bestehend aus einem Organotitanat, einem Organozirconat und einem Organoaluminat.

Der Begriff "Katalysator" bezeichnet hierbei auch Vernetzer und vernetzend wirkende Substanzen welche in geringen Konzentrationen wirken.

In den dargestellten Formeln stellt die gestrichelte Linie die Bindung des Sauerstoffs zum Metall dar.

Geeignete Organotitanate, Organozirconate und Organoaluminate weisen Liganden auf, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden von einander sein können.

Als Alkoxygruppen haben sich insbesondere so genannte Neoalkoxy-Substituenten, insbesondere der Formel (V), als besonders geeignet erwiesen.

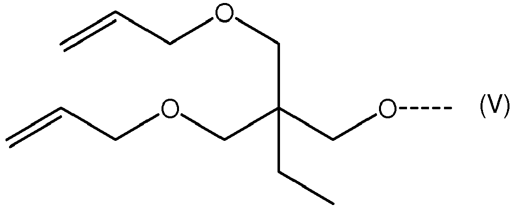

Als Sulfonsäuren haben sich insbesondere aromatische Sulfonsäuren, deren Aromaten mit einer Alkylgruppe substituiert sind, als besonders geeignet erwiesen. Als bevorzugte Sulfonsäuren gelten Reste der Formel (VI). 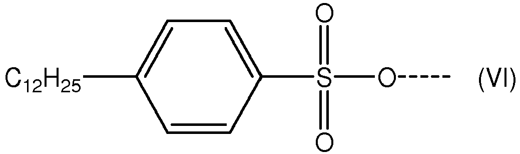 Besonders geeignet als Carboxylatgruppen haben sich insbesondere Carboxylate von Fettsäuren erwiesen. Als bevorzugtes Carboxylat gelten Decanoat, Stearat und Isostearat.

Insbesondere weist der Katalysator für die Vernetzung von silanfunktionellen Polymeren mindestens einen mehrzähnigen Liganden, auch Chelatligand genannt, auf. Insbesondere ist der mehrzähnige Ligand ein zweizähniger Ligand.

Vorzugsweise handelt es sich beim zweizähnigen Liganden um einen Liganden der Formel (VII)

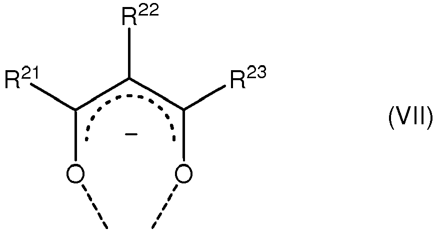

Dabei steht der Rest R²¹ für ein Wasserstoffatom oder für eine lineare oder verzweigte Alkylgruppe mit 1 bis 8 C-Atomen, insbesondere für eine Methylgruppe.

Der Rest R²² steht für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom.

Der Rest R²³ steht für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen.

Bevorzugt handelt es sich beim Katalysator für die Vernetzung von silanfunktionellen Polymeren um ein Organotitanat, insbesondere um ein Organotitanat der Formel (VIII).

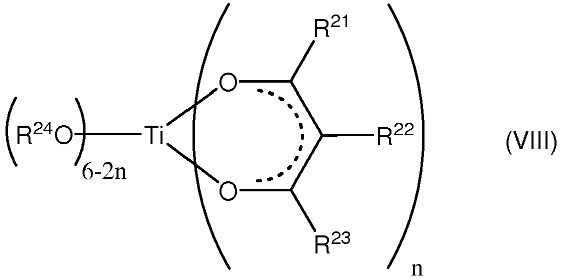

Die Reste R²¹, R²² und R²³ wurden bereits vorhergehend beschreiben.

Der Rest R²⁴ steht für einen linearen oder verzweigten Alkylrest mit 2 bis 20 C-Atomen, insbesondere für einen Isobutyl- oder für einen Isopropylrest.

n steht für einen Wert von 1 oder 2, insbesondere für 2.

Bevorzugt sind Organotitanate der Formel (VIII), wobei der Rest R²¹ für eine Methylgruppe, der Rest R²² für ein Wasserstoffatom, der Rest R²³ für eine Methylgruppe oder Methoxy- oder Ethoxygruppe und der Rest R²⁴ für einen Isobutyl- oder für einen Isopropylrest steht.

Organotitanate weisen den Vorteil auf, dass eine höhere Geschwindigkeit bei der Vernetzung erreicht werden kann.

Geeignete Organotitanate sind beispielsweise unter den Handelsnamen Tyzor® AA, GBA, GBO, AA-75, AA-65, AA-105, DC, BEAT, IBAY kommerziell erhältlich von der Firma DuPont, USA, oder unter den Handelsnamen Tytan™ PBT, TET, X85, TAA, ET, S2, S4 oder S6 kommerziell erhältlich von TensoChema AG, Schweiz.

Organozirconate sind kommerziell erhältlich, beispielsweise bei der Firma Kenrich Petrochemicals. Geeignete Organozirconate sind beispielsweise Ken-React® NZ 38J, NZ TPPJ, KZ OPPR, KZ TPP, NZ 01, NZ 09, NZ 12, NZ38, NZ 44, NZ 97. Weitere geeignete Organozirconate sind unter den Handelsnamen Snapcure™ 3020, 3030, 1020 kommerziell erhältlich von der Firma Johnson Matthey & Brandenberger AG, Schweiz.

Geeignete Organoaluminate sind beispielsweise kommerziell erhältlich unter dem Handelsnamen K-Kat® 5218 von der Firma Worlée-Chemie GmbH, Deutschland.

Selbstverständlich ist es möglich oder in gewissen Fällen sogar bevorzugt, Mischungen verschiedener Katalysatoren einzusetzen.

Der Anteil des Katalysators beträgt vorzugsweise 0.1 bis 10 Gew.-%, insbesondere 0.2 bis 4 Gew.-%, bevorzugt 0.3 bis 3 Gew.-%, meist bevorzugt 0.5 bis 1.5 Gew.-%, der gesamten Zusammensetzung.

Weiterhin umfasst die erfindungsgemässe Zusammensetzung mindestens eine Verbindung, welche mindestens eine Amidinogruppe aufweist. Insbesondere handelt es sich dabei um eine Verbindung der Formel (IX).

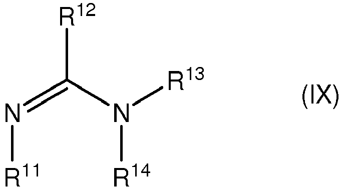

Dabei steht der Rest R¹¹ für ein Wasserstoffatom, für einen einwertigen Kohlenwasserstoffrest mit 1 bis 10 C-Atomen oder zusammen mit R¹⁴ für einen gegebenenfalls substituierten, zweiwertigen Kohlenwasserstoffrest mit 1 bis 10 C-Atomen.

Der Rest R¹² steht für ein Wasserstoffatom, für einen einwertigen Kohlenwasserstoffrest mit 1 bis 12 C-Atomen, gegebenenfalls mit cyclischen oder aromatischen Anteilen, und gegebenenfalls mit einem oder mehreren Heteroatomen, für eine Aminogruppe oder zusammen mit R¹³ für einen gegebenenfalls substituierten, zweiwertigen Kohlenwasserstoffrest mit 1 bis 10 C-Atomen.

Der Rest R¹³ steht für ein Wasserstoffatom, für einen einwertigen Kohlenwasserstoffrest mit 1 bis 12 C-Atomen, gegebenenfalls mit cyclischen oder aromatischen Anteilen, und gegebenenfalls mit einem oder mehreren Heteroatomen oder zusammen mit R¹² für einen gegebenenfalls substituierten, zweiwertigen Kohlenwasserstoffrest mit 1 bis 10 C-Atomen.

Der Rest R¹⁴ steht für ein Wasserstoffatom, für einen einwertigen Kohlenwasserstoffrest mit 1 bis 10 C-Atomen oder zusammen mit R¹¹ für einen gegebenenfalls substituierten, zweiwertigen Kohlenwasserstoffrest mit 1 bis 10 C-Atomen.

Beispielsweise handelt es sich beim Rest R¹² und/oder R¹³, welcher Heteroatome aufweist, um einen Alkylrest, der eine Silangruppe aufweist, wie etwa einem Alkyltrialkoxysilanrest, wobei die Silangruppe keine Methoxygruppen aufweist.

Vorzugsweise ist die Verbindung, welche mindestens eine Amidino-Gruppe aufweist, ein Guanidin, ein Imidazol, ein Imidazolin, ein bicyclisches Amidin oder ein Derivat dieser Verbindungen. Beispielsweise sind solche Derivate substituierte Imidazole oder Imidazoline, insbesondere eine Silangruppe aufweisende Imidazole oder Imidazoline, wobei die Silangruppe keine Methoxygruppen aufweist.

Bevorzugte Verbindungen, welche mindestens eine Amidinogruppe aufweisen sind 1,8-Diazabicyclo[5.4.0]undec-7-en (DBU), 1,5-Diazabicyclo[4.3.0]non-5-en (DBN), 6-(Dibutylamino)-1,8-diazabicyclo[5.4.0]undec-7-en, N-Methyltriazabicyclodecen, Tetramethylguanidin, 2-Guanidinobenzimidazol, Acetylacetoneguanidin, 1,3-Di-o-tolylguanidin (DTG), 1,3-Diphenylguanidin, o-Tolylbiguanidin, 2-tert-Butyl-1,1,3,3-tetramethylguanidine oder N-(3-Triethoxysilylpropyl)-4,5-dihydroimidazol.

Der Anteil der Verbindung, welche mindestens eine Amidinogruppe aufweist beträgt 0.3 bis 0.5 Gew.-% der gesamten Zusammensetzung, bevorzugt 0.4 bis 0.45 Gew.-%. Bei Anteilen von mehr als 0.5 Gew.-% kann es zum Ausschwitzen der Verbindung aus der ausgehärteten Zusammensetzung kommen, was für bestimmte Anwendungen nachteilig ist (optische Erscheinung, leichte Verschmutzbarkeit, etc.).

Bevorzugt handelt es sich beim Amidin um ein bicyclisches Amidin, insbesondere mit 9, 10, 11, oder 12 Kohlenstoffatomen im bicyclischen Bestandteil. Der Vorteil dieser Verbindungen ist, dass sie eine höhere Reaktivität aufweisen und ihr Gehalt daher vergleichsweise gering gehalten werden kann. Dadurch kann wiederum das Ausschwitzen dieser Verbindungen aus der ausgehärteten Zusammensetzung reduziert werden.

Vorzugsweise ist die erfindungsgemässe Zusammensetzung im Wesentlichen frei von Zinn oder organischen Zinnverbindungen. Insbesondere umfasst die Zusammensetzung weniger als 0.06 Gew.-%, insbesondere weniger als 0.01 Gew.-%, Zinn oder organische Zinnverbindungen. Bevorzugt enthält die Zusammensetzung kein Zinn und keine organischen Zinnverbindungen, wie sie typischerweise zur Aushärtung von Zusammensetzungen auf Basis von silanterminierten Polymeren eingesetzt werden. Zinnfreie Zusammensetzung weisen sowohl ökologische als auch toxikologische Vorteile auf.

Eine Zusammensetzung, welche frei von Zinn und organischen Zinnverbindungen ist, setzt auch voraus, dass einzelne Bestandteile der Zusammensetzung nicht unter Einfluss von Zinn oder organischen Zinnverbindungen hergestellt wurden. Typischerweise erfolgt also die Herstellung des silanfunktionellen Polymers **P** ohne den Einfluss von Zinn oder organischen Zinnverbindungen.

Vorzugsweise weist die Zusammensetzung weiterhin einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte Zusammensetzung.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltriethoxysilan, α-funktionelle Silane wie N-(Silylmethyl)-O-methyl-carbamate, insbesondere N-(Methyldi-ethoxysilylmethyl)-O-methyl-carbamat, (Methacryloxymethyl)silane, Ethoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Die erfindungsgemässe Zusammensetzung umfasst insbesondere keine Bestandteile, welche bei der Aushärtung Methanol abspalten. Derartige Bestandteile sind neben dem silanfunktionellen Polymer **P** gegebenenfalls vorhandene reaktive Bestandteile wie beispielsweise Haftvermittler, Trocknungsmittel, Reaktivverdünner, Vernetzer und andere vorhergehend beschriebene Bestandteile.

Bestandteile, welche bei der Aushärtung Methanol abspalten, sind typischerweise Methoxygruppen aufweisende, silanfunktionelle Verbindungen. Insbesondere umfasst also die erfindungsgemässe Zusammensetzung keine silanfunktionellen Verbindungen, welche Methoxysilangruppen aufweisen. Bevorzugt weisen sämtliche in der Zusammensetzung vorhandene silanfunktionelle Verbindungen Endgruppen der Formel (I) auf, wobei die Reste R¹, R² und R³ sowie der Index a bereits vorhergehen beschreiben worden sind. Meist bevorzugt sind alle in der Zusammensetzung enthaltenen hydrolysierbaren Silangruppen Ethoxysilangruppen, insbesondere Triethoxysilangruppen. Der Vorteil einer solchen Zusammensetzung, in welcher alle hydrolysierbaren Silangruppen identisch sind, insbesondere Ethoxysilangruppen, liegt darin, dass die Eigenschaften der Zusammensetzung bei der Lagerung nicht durch unvorteilhafte Umetherungen an den Silangruppen beeinflusst werden. Da unterschiedliche Alkoxygruppen an den Silanen in der Regel zu unterschiedlichen Reaktionsgeschwindigkeiten dieser Silanegruppen führen, könnten Umetherungen dazu führen, dass eine als schnell reagierende Silangruppe vorgesehene Silangruppe, bspw. jene eines Trocknungsmittels, nach längerer Lagerung plötzlich langsamer reagiert. Durch den Einsatz von ausschliesslich identischen Alkoxysilangruppen, können konstante Eigenschaften der Zusammensetzung auch nach längerer Lagerung von bspw. einem halben Jahr oder mehr gewährleistet werden.

In einer meist bevorzugten Ausführungsform ist das silanfunktionelle Polymer **P** ein silanfuntionelles Polymer **P1** und weist als Silangruppen nur Triethoxysilangruppen auf. Weiterhin weisen gegebenenfalls vorhandene Silangruppen enthaltende Additive als Silangruppen nur Triethoxysilangruppen oder Alkyldiethoxysilangruppen, insbesondere Methyl- oder Ethyldiethoxysilangruppen, bevorzugt Triethoxysilangruppen, auf.

Es ist vorteilhaft, alle genannten, in der Zusammensetzung gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation der beschriebenen Zusammensetzung auf mindestens einen Festkörper oder Artikel kommen die in der Zusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die beispielsweise über einen Statikmischer eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchtigkeit und der Klebegeometrie, bestimmt und verlangsamt sich in der Regel mit dem Fortschreiten der Aushärtung.

Weiterhin umfasst die vorliegende Erfindung die Verwendung einer vorhergehend beschriebenen Zusammensetzung als Klebstoff, Dichtstoff oder Beschichtung.

Die erfindungsgemässe Zusammensetzung wird insbesondere verwendet in einem Verfahren des Verklebens zweier Substrate **S1** und **S2** umfassend die Schritte
i) Applikation einer Zusammensetzung gemäss vorhergehender Beschreibung auf ein Substrat **S1** und/oder ein Substrat **S2;**
ii) Kontaktieren der Substrate **S1** und **S2** über die applizierte Zusammensetzung innerhalb der Offenzeit der Zusammensetzung;
iii) Aushärtung der Zusammensetzung mittels Wasser;
wobei die Substrate **S1** und **S2** gleich oder verschieden voneinander sind.

Weiterhin kann die erfindungsgemässe Zusammensetzung auch verwendet werden in einem Verfahren der Abdichtung oder des Beschichtens umfassend die Schritte
i') Applikation einer Zusammensetzung gemäss vorhergehender Beschreibung auf ein Substrat **S1** und/oder zwischen zwei Substrate **S1** und **S2;**
ii') Aushärtung der Zusammensetzung mittels Wasser, insbesondere in der Form von Luftfeuchtigkeit;
wobei die Substrate **S1** und **S2** gleich oder verschieden voneinander sind.

Als Substrate **S1** und/oder **S2** eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Weiterhin betrifft die Erfindung eine gehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit.

Bei den Artikeln, welche mit einer erfindungsgemässen Zusammensetzung verklebt, abgedichtet oder beschichtet werden, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels.

Weiterhin betrifft die vorliegenden Erfindung die Verwendung eines Katalysators ausgewählt aus der Gruppe bestehend aus einem Organotitanat, Organozirconat und Organoaluminat, zusammen mit einer Verbindung, welche mindestens eine Amidinogruppe aufweist zur Vernetzung von silanterminierten Polymeren mit Alkoxy-Endgruppen, welche keine Methoxygruppen sind. Bevorzugte Katalysatoren und Verbindungen, welche mindestens eine Amidinogruppe aufweisen, wurden bereits vorhergehend beschrieben.

Weiterhin betrifft die Erfindung ein Katalysatorsystem für die Vernetzung von silanterminierten Polymeren mit Alkoxy-Endgruppen, welche keine Methoxygruppen sind, umfassend ein Organotitanat, Organozirconat oder Organoaluminat, sowie eine Verbindung, welche mindestens eine Amidinogruppe aufweist.

Bevorzugte Organotitanate, Organozirconate, Organoaluminate und Verbindungen, welche mindestens eine Amidinogruppe aufweisen, wurden bereits vorhergehend beschrieben.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit,** die **Bruchdehnung,** und der **Elastizitätsmodul** (E-Modul) bei 0 bis 100 % Dehnung wurden nach DIN EN 53504 (Zuggeschwindigkeit: 200 mm/min) an während 7 Tagen bei 23 °C und 50 % relativer Luftfeuchtigkeit ausgehärteten Filmen mit einer Schichtdicke von 2 mm bestimmt.

Der **Weiterreisswiderstand** wurde bestimmt nach DIN 53515, an während 7 Tagen bei 23 °C und 50 % relativer Luftfeuchtigkeit ausgehärteten Filmen mit einer Schichtdicke von 2 mm.

Die **Shore A-Härte** wurde bestimmt nach DIN 53505, an während 7 Tagen bei 23 °C und 50 % relativer Luftfeuchtigkeit ausgehärteten Probekörpern mit einer Schichtdicke von 6 mm.

Die **Hautbildungszeit** (Zeit bis zur Klebefreiheit, "tack-free time") wurde bei 23 °C und 50 % relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels einer Pipette aus LDPE erstmals keine Rückstände auf der Pipette mehr zurückblieben.

### Herstellung des silanfunktionellen Polyurethanpolymers mit Ethoxy-Endgruppen P-EtO

Unter Stickstoffatmosphäre wurden 700 g Polyol Acclaim® 12200 (Bayer MaterialScience AG, Deutschland; low monol Polyoxypropylendiol; OH-Zahl 11.0 mg KOH/g; Wassergehalt ca. 0.02 Gew.-%), 32.1 g Isophorondiisocyanat (Vestanat® IPDI, Evonik Degussa GmbH, Deutschland), 85.4 g 2,2,4-Trimethyl-1,3-pentandioldiisobutyrat (Eastman TXIB™; Eastman Chemical Company, USA) und 0.4 g Tyzor® IBAY (von DuPont, USA) unter stetigem Rühren auf 90 °C aufgeheizt und bei dieser Temperatur belassen. Nach einer Stunde Reaktionszeit wurde mittels Titration ein freier Gehalt an Isocyanatgruppen von 0.7 Gew.-% erreicht. Anschliessend wurden 0.14 mol (entspricht einer stöchiometrischen Umsetzung der NCO-Gruppen mit Silan) reaktives Silan (***Int-EtO***) beigefügt und für weitere 2 bis 3 Stunden bei 90 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23 °C) abgekühlt und unter Ausschluss von Feuchtigkeit aufbewahrt (theoretischer Polymergehalt = 90%).

Das reaktive Silan ***Int-EtO*** (N-(3-Triethoxysilyl-propyl)-amino-bernsteinsäurediethylester) wurde wie folgt hergestellt: 100 g 3-Aminopropyltriethoxysilan (Dynasylan® AMEO von Evonik Degussa GmbH, Deutschland) wurden vorgelegt. Unter gutem Rühren wurden bei Raumtemperatur langsam 77.8 g Maleinsäure-diethylester (Fluka Chemie GmbH, Schweiz) zugegeben und die Mischung während 12 Stunden bei 60 °C gerührt.

### Herstellung des Thixotropierungsmittels TM

In einem Vakuummischer wurden 1000 g Diisodecylphthalat (DIDP, Palatinol® Z, BASF SE, Deutschland) und 160 g 4,4'-Diphenylmethandiisocyanat (Desmodur® 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel ***TM*** enthält 20 Gew.-% Thixotropierungsmittel in 80 Gew.-% Diisodecylphthalat.

### Herstellung der Klebstoffe

In einem Vakuummischer wurden entsprechend den in den Tabellen 1 bis 3 angegebenen Gewichtsteilen das silanfunktionelles Polymer ***P-EtO,*** DIDP, Thixotropierungsmittel ***TM*** und Vinyltriethoxysilan (Dynasylan® VTEO von Evonik Degussa GmbH, Deutschland) während 5 Minuten gut vermischt. Anschliessend wurde getrocknete, gefällte Kreide (Socal® U1S2, Solvay SA, Belgien) und gemahlene Kreide (Omyacarb® 5-GU, Omya AG, Schweiz) während 15 Minuten bei 60 °C eingeknetet. Bei ausgeschalteter Heizung wurden anschliessend 3-Aminopropyltriethoxysilan (Dynasylan® AMEO), Katalysator und gegebenenfalls eine Verbindung, welche mindestens eine Amidinogruppe aufweist, unter Vakuum während 10 Minuten zu einer homogenen Paste verarbeitet. Diese wurde dann in innenlackierte Aluminium-Spreizkolbenkartuschen abgefüllt.

**Tabelle 1: Klebstoffzusammensetzungen in Gewichtsteilen und Resultate**

| | ***1*** | ***2*** | ***3*** | ***4*** | ***5*** |
|---|---|---|---|---|---|
| ***P-EtO*** | 13 | 13 | 13 | 13 | 13 |
| DIDP | 19 | 19 | 19 | 19 | 19 |
| ***TM*** | 2 | 2 | 2 | 2 | 2 |
| Dynasylan® VTEO | 1 | 1 | 1 | 1 | 1 |
| Socal® U1S2 | 11 | 11 | 11 | 11 | 11 |
| Omyacarb® 5-GU | 52 | 52 | 52 | 52 | 52 |
| Dynasylan® AMEO | 0.5 | 0.5 | 0.5 | 0.5 | 0.5 |
| Metatin® K712 ^{a)} | 1 | | | 1 | |
| Tyzor® IBAY | | 1 | | | 1 |
| DBU ^{b)} | | | 0.2 | 0.2 | 0.2 |
| | | | | | |
| Ausgehärtet nach 1 Woche | Nein | Nein | Nein | Nein | Ja |

| | | | | | |
|---|---|---|---|---|---|
| ^{a)} 10 %-ige Lösung in DIDP; ^{b)} DBU (1,8-Diazabicyclo[5.4.0]undec-7-en) erhältlich von BASF SE, Deutschland. | | | | | |

**Tabelle 2: Klebstoffzusammensetzungen in Gewichtsteilen und Resultate**

| | ***5*** | ***6*** | ***7*** | ***8*** | ***9*** | ***10*** | ***11*** |
|---|---|---|---|---|---|---|---|
| ***P-EtO*** | 13 | 13 | 13 | 13 | 13 | 13 | 13 |
| DIDP | 19 | 19 | 19 | 19 | 19 | 19 | 19 |
| ***TM*** | 2 | 2 | 2 | 2 | 2 | 2 | 2 |
| Dynasylan® VTEO | 1 | 1 | 1 | 1 | 1 | 1 | 1 |
| Socal® U1S2 | 11 | 11 | 11 | 11 | 11 | 11 | 11 |
| Omyacarb® 5-GU | 52 | 52 | 52 | 52 | 52 | 52 | 52 |
| Dynasylan® AMEO | 0.5 | 0.5 | 0.5 | 0.5 | 0.5 | 0.5 | 0.5 |
| Tyzor® IBAY | 1 | 1 | 1 | 1 | 1 | 1 | 1 |
| DBU | 0.2 | | | | | | |
| Tetramethylguanidin ^{a)} | | 0.2 | | | | | |
| Methylimidazol ^{a)} | | | 0.2 | | | | |
| N-(3-Triethoxysilylpropyl)-4,5-dihydroimidazol ^{b)} | | | | 0.2 | | | |
| DMDEE ^{c)} | | | | | 0.2 | | |
| DMP ^{d)} | | | | | | 0.2 | |
| 1,4-Diaza-bicyclo[2.2.2]octane ^{e)} | | | | | | | 0.2 |
| | | | | | | | |
| Ausgehärtet nach 1 Woche | Ja | Ja | Ja | Ja | Nein | Nein | Nein |
| Zugfestigkeit [MPa] | 0.8 | 0.8 | 0.4 | 0.6 | n.b. | n.b. | n.b. |
| Bruchdehnung [%] | 416 | 536 | 148 | 240 | n.b. | n.b. | n.b. |
| E-Modul 0-100% [MPa] | 0.5 | 0.7 | 0.3 | 0.4 | n.b. | n.b. | n.b. |
| Weiterreisswiderstand [N/mm] | 5.8 | 5.9 | 1.7 | 4.5 | n.b. | n.b. | n.b. |
| Hautbildungszeit [min] | 40 | 120 | > 8h | 80 | n.b. | n.b. | n.b. |
| Shore A | 31 | 29 | 8 | 25 | n.b. | n.b. | n.b. |

| | | | | | | | |
|---|---|---|---|---|---|---|---|
| ^{a)} erhältlich von Fluka Chemie GmbH, Schweiz; ^{b)} erhältlich von Gelest, Inc., USA; ^{c)} DMDEE (2,2'-Dimorpholinodiethylether) erhältlich als Jeffcat® DMDEE von Huntsman Corporation, USA; ^{d)} DMP (Dimethylpiperazin) erhältlich als Jeffcat® DMP von Huntsman Corp.; ^{e)} erhältlich als Jeffcat® TD-100 von Huntsman Corp.; n.b.: nicht bestimmt, da keine Aushärtung nach 1 Woche. | | | | | | | |

**Tabelle 3: Klebstoffzusammensetzungen in Gewichtsteilen und Resultate**

| | ***5*** | ***12*** | ***13*** | ***14*** | ***15*** | ***16*** |
|---|---|---|---|---|---|---|
| ***P-EtO*** | 13 | 13 | 13 | 13 | 13 | 13 |
| DIDP | 19 | 19 | 19 | 19 | 19 | 19 |
| ***TM*** | 2 | 2 | 2 | 2 | 2 | 2 |
| Dynasylan® VTEO | 1 | 1 | 1 | 1 | 1 | 1 |
| Socal® U1S2 | 11 | 11 | 11 | 11 | 11 | 11 |
| Omyacarb® 5-GU | 52 | 52 | 52 | 52 | 52 | 52 |
| Dynasylan® AMEO | 0.5 | 0.5 | 0.5 | 0.5 | 0.5 | 0.5 |
| DBU | 0.2 | 0.2 | 0.2 | 0.2 | 0.2 | 0.4 |
| Tyzor® IBAY | 1 | | | | | |
| Tytan™ ET ^{a)} | | 1 | | | | |
| Tytan™ TAA ^{a)} | | | 1 | | | |
| Tytan™ PBT ^{a)} | | | | 1 | | |
| Snapcure™ 1020 ^{b)} | | | | | 1 | |
| K-Kat® 5218 ^{c)} | | | | | | 1 |
| | | | | | | |
| Zugfestigkeit [MPa] | 0.8 | 1 | 0.8 | 0.9 | 0.3 | 0.8 |
| Bruchdehnung [%] | 416 | 156 | 434 | 154 | 140 | 443 |
| E-Modul 0-100% [MPa] | 0.5 | 0.9 | 0.5 | 0.8 | 0.2 | 0.4 |
| Weiterreisswiderstand [N/mm] | 5.8 | 5 | 6.1 | 5.3 | 1.3 | 4 |
| Hautbildungszeit [min] | 40 | 80 | 20 | 80 | ∼1000 | 210 |
| Shore A | 31 | 44 | 36 | 38 | 12 | 32 |

| | | | | | | |
|---|---|---|---|---|---|---|
| ^{a)} erhältlich von TensoChema AG, Schweiz; ^{b)} erhältlich von Johnson Matthey & Brandenberger AG, Schweiz; ^{c)} erhältlich von Worlée-Chemie GmbH, Deutschland. | | | | | | |

## Patentansprüche

1. Zusammensetzung umfassend
a) mindestens ein silanfunktionelles Polymer **P** mit Alkoxy-Endgruppen, welche keine Methoxygruppen sind;
b) mindestens einen Katalysator für die Vernetzung von silanfunktionellen Polymeren, ausgewählt aus der Gruppe bestehend aus einem Organotitanat, Organozirconat und Organoaluminat;
c) mindestens eine Verbindung, welche mindestens eine Amidinogruppe aufweist, wobei die Alkoxy-Endgruppen des silanfunktionellen Polymers P, Endgruppen der Formel (I) sind 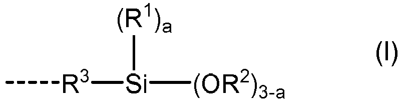 wobei
R¹ für eine Alkylgruppe mit 1 bis 8 C-Atomen steht;
R² für eine Alkylgruppe mit 2 bis 12 C-Atomen steht;
R³ für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, steht; und
a für einen Wert von 0 oder 1 oder 2 steht; und wobei der Anteil der Verbindung, welche mindestens eine Amidinogruppe aufweist, 0.3 bis 0.5 Gew.-%, der gesamten Zusammensetzung beträgt.

2. Zusammensetzung gemäss einem der vorhergehenden Ansprüche, **dadurch gekennzeichnet, dass** die Alkoxy-Endgruppen des silanfunktionellen Polymers **P** Ethoxygruppen sind.

3. Zusammensetzung gemäss einem der vorhergehenden Ansprüche, **dadurch gekennzeichnet, dass** der Katalysator für die Vernetzung von silanfunktionellen Polymeren mindestens einen mehrzähnigen Liganden aufweist.

4. Zusammensetzung gemäss einem der vorhergehenden Ansprüche, **dadurch gekennzeichnet, dass** der Katalysator für die Vernetzung von silanfunktionellen Polymeren ein Organotitanat ist.

5. Zusammensetzung gemäss Anspruch 4, **dadurch gekennzeichnet, dass** das Organotitanat ein Organotitanat der Formel (VIII) ist 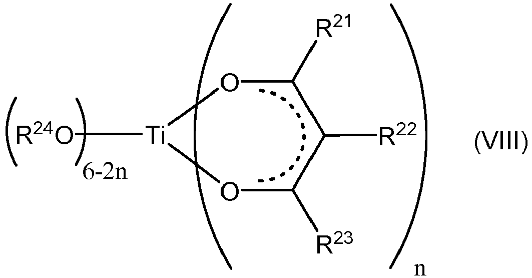 wobei
R²¹ für ein Wasserstoffatom oder für eine lineare oder verzweigte Alkylgruppe mit 1 bis 8 C-Atomen steht;
R²² für ein Wasserstoffatom oder für eine lineare oder verzweigte Alkylgruppe mit 1 bis 8 C-Atomen, welche gegebenenfalls Heteroatome aufweist, steht;
R²³ für ein Wasserstoffatom oder für eine Alkylgruppe mit 1 bis 8 C-Atomen oder für eine lineare oder verzweigte Alkoxygruppe mit 1 bis 8 C-Atomen, steht;
R²⁴ für einen linearen oder verzweigten Alkylrest mit 2 bis 20 C-Atomen steht; und
n für einen Wert von 1 oder 2 steht.

6. Zusammensetzung gemäss einem der vorhergehenden Ansprüche, **dadurch gekennzeichnet, dass** die Verbindung, welche mindestens eine Amidinogruppe aufweist, eine Verbindung der Formel (IX) ist 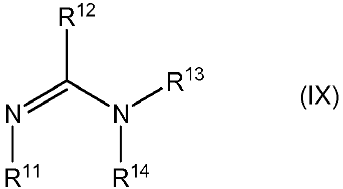 wobei
R¹¹ für ein Wasserstoffatom, für einen einwertigen Kohlenwasserstoffrest mit 1 bis 10 C-Atomen oder zusammen mit R¹⁴ für einen gegebenenfalls substituierten, zweiwertigen Kohlenwasserstoffrest mit 1 bis 10 C-Atomen steht;
R¹² für ein Wasserstoffatom, für einen einwertigen Kohlenwasserstoffrest mit 1 bis 12 C-Atomen, gegebenenfalls mit cyclischen oder aromatischen Anteilen, und gegebenenfalls mit einem oder mehreren Heteroatomen, für eine Aminogruppe oder zusammen mit R¹³ für einen gegebenenfalls substituierten, zweiwertigen Kohlenwasserstoffrest mit 1 bis 10 C-Atomen steht;
R¹³ für ein Wasserstoffatom, für einen einwertigen Kohlenwasserstoffrest mit 1 bis 12 C-Atomen, gegebenenfalls mit cyclischen oder aromatischen Anteilen, und gegebenenfalls mit einem oder mehreren Heteroatomen oder zusammen mit R¹² für einen gegebenenfalls substituierten, zweiwertigen Kohlenwasserstoffrest mit 1 bis 10 C-Atomen steht; und
R¹⁴ für ein Wasserstoffatom, für einen einwertigen Kohlenwasserstoffrest mit 1 bis 10 C-Atomen oder zusammen mit R¹¹ für einen gegebenenfalls substituierten, zweiwertigen Kohlenwasserstoffrest mit 1 bis 10 C-Atomen steht.

7. Zusammensetzung gemäss einem der vorhergehenden Ansprüche, **dadurch gekennzeichnet, dass** die Verbindung, welche mindestens eine Amidinogruppe aufweist, ein Guanidin, ein Imidazol, ein Imidazolin, ein bicyclisches Amidin oder ein Derivat dieser Verbindungen ist.

8. Zusammensetzung gemäss einem der vorhergehenden Ansprüche, **dadurch gekennzeichnet, dass** die Zusammensetzung weniger als 0.06 Gew. % Zinn oder organischen Zinnverbindungen umfasst.

9. Zusammensetzung gemäss einem der vorhergehenden Ansprüche, **dadurch gekennzeichnet, dass** die Zusammensetzung keine Bestandteile umfasst, welche bei der Aushärtung Methanol abspalten.

10. Zusammensetzung gemäss einem der vorhergehenden Ansprüche, **dadurch gekennzeichnet, dass** der Anteil des Katalysators 0.1 bis 10 Gew.-%, insbesondere 0.2 bis 4 Gew.-%, bevorzugt 0.3 bis 3 Gew.-%, der gesamten Zusammensetzung beträgt.

11. Verwendung einer Zusammensetzung gemäss einem der vorhergehenden Ansprüche als Klebstoff, Dichtstoff oder als Beschichtung.

## Claims

1. Composition comprising
a) at least one silane-functional polymer P with alkoxy end groups that are not methoxy groups;
b) at least one catalyst for the cross-linking of silane-functional polymers, selected from the group consisting of an organotitanate, organozirconate and organoaluminate;
c) at least one compound that has at least one amidino group, wherein the alkoxy end groups of the silane-functional polymer **P** are end groups of formula (I) 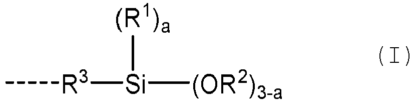 where
R¹ represents an alkyl group with 1 to 8 C atoms;
R² represents an alkyl group with 2 to 12 C atoms;
R³ represents a linear or branched, optionally cyclic, alkylene group with 1 to 12 C atoms, optionally with aromatic fractions, and optionally with one or more heteroatoms; and
a represents a value of 0 or 1 or 2; and wherein the fraction of the compound that has at least one amidino group amounts to 0.3 to 0.5 wt% of the total composition.

2. Composition according to one of the preceding claims, **characterized in that** the alkoxy end groups of the silane-functional polymer **P** are ethoxy groups.

3. Composition according to one of the preceding claims, **characterized in that** the catalyst for the cross-linking of silane-functional polymers has at least one multidentate ligand.

4. Composition according to one of the preceding claims, **characterized in that** the catalyst for the cross-linking of silane-functional polymers is an organotitanate.

5. Composition according to Claim 4, **characterized in that** the organotitanate is an organotitanate of formula (VIII) 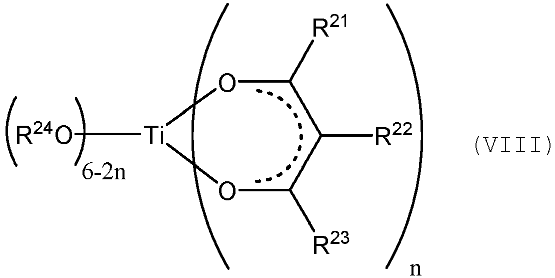 where
R²¹ represents a hydrogen atom or represents a linear or branched alkyl group with 1 to 8 C atoms;
R²² represents a hydrogen atom or represents a linear or branched alkyl group with 1 to 8 C atoms, which optionally contains heteroatoms;
R²³ represents a hydrogen atom or represents an alkyl group with 1 to 8 C atoms or represents a linear or branched alkoxy group with 1 to 8 C atoms;
R²⁴ represents a linear or branched alkyl radical with 2 to 20 C atoms; and
n represents a value of 1 or 2.

6. Composition according to one of the preceding claims, **characterized in that** the compound that has at least one amidino group is a compound of formula (IX) 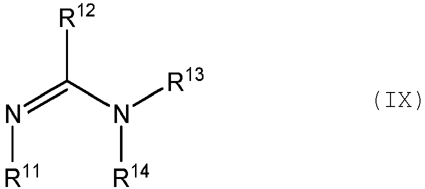 where
R¹¹ represents a hydrogen atom, a monovalent hydrocarbon radical with 1 to 10 C atoms or together with R¹⁴ represents an optionally substituted, divalent hydrocarbon radical with 1 to 10 C atoms;
R¹² represents a hydrogen atom, a monovalent hydrocarbon radical with 1 to 12 C atoms, optionally with cyclic or aromatic fractions, and optionally with one or more heteroatoms, an amino group or together with R¹³ represents an optionally substituted, divalent hydrocarbon radical with 1 to 10 C atoms;
R¹³ represents a hydrogen atom, a monovalent hydrocarbon radical with 1 to 12 C atoms, optionally with cyclic or aromatic fractions, and optionally with one or more heteroatoms or together with R¹² represents an optionally substituted, divalent hydrocarbon radical with 1 to 10 C atoms; and
R¹⁴ represents a hydrogen atom, a monovalent hydrocarbon radical with 1 to 10 C atoms or together with R¹¹ represents an optionally substituted, divalent hydrocarbon radical with 1 to 10 C atoms.

7. Composition according to one of the preceding claims, **characterized in that** the compound that has at least one amidino group is a guanidine, an imidazole, an imidazoline, a bicyclic amidine or a derivative of these compounds.

8. Composition according to one of the preceding claims, **characterized in that** the composition comprises less than 0.06 wt% of tin or organic tin compounds.

9. Composition according to one of the preceding claims, **characterized in that** the composition comprises no constituents that split off methanol when curing.

10. Composition according to one of the preceding claims, **characterized in that** the fraction of the catalyst amounts to 0.1 to 10 wt%, especially 0.2 to 4 wt%, preferably 0.3 to 3 wt%, of the total composition.

11. Use of a composition according to one of the preceding claims as adhesive, sealant or coating.

## Revendications

1. Composition comprenant
a) au moins un polymère P fonctionnalisé par silane comportant des groupes terminaux alcoxy, qui ne sont pas des groupes méthoxy ;
b) au moins un catalyseur pour la réticulation de polymères fonctionnalisés par silane, choisi dans le groupe constitué par un organotitanate, un organozirconate et un organoaluminate ;
c) au moins un composé qui présente au moins un groupe amidino, les groupes terminaux alcoxy du polymère P fonctionnalisé par silane étant des groupes terminaux de formule (I) 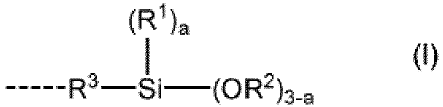
R¹ représentant un groupe alkyle comportant 1 à 8 atomes de C ;
R² représentant un groupe alkyle comportant 2 à 12 atomes de C ;
R³ représentant un groupe alkylène linéaire ou ramifié, éventuellement cyclique, comportant 1 à 12 atomes de C, éventuellement comportant des parties aromatiques, et éventuellement comportant un ou plusieurs hétéroatomes ; et
a représentant une valeur de 0 ou de 1 ou de 2 ; et
la proportion du composé qui présente au moins un groupe amidino étant de 0,3 à 0,5 % en poids de la composition totale.

2. Composition selon l'une quelconque des revendications précédentes, **caractérisée en ce que** les groupes terminaux alcoxy du polymère P fonctionnalisé par silane sont des groupes éthoxy.

3. Composition selon l'une quelconque des revendications précédentes, **caractérisée en ce que** le catalyseur pour la réticulation de polymères fonctionnalisés par silane présente au moins un ligand multidentate.

4. Composition selon l'une quelconque des revendications précédentes, **caractérisée en ce que** le catalyseur pour la réticulation de polymères fonctionnalisés par silane est un organotitanate.

5. Composition selon la revendication 4, **caractérisée en ce que** l'organotitanate est un organotitanate de formule (VIII) 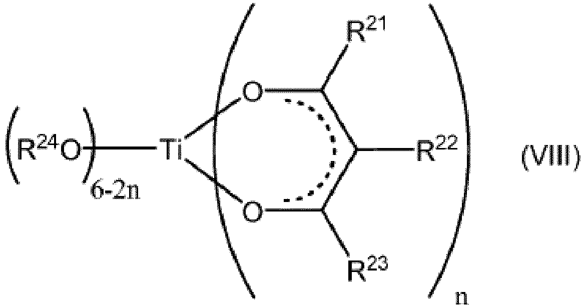
R²¹ représentant un atome d'hydrogène ou un groupe alkyle linéaire ou ramifié comportant 1 à 8 atomes de C ;
R²² représentant un atome d'hydrogène ou un groupe alkyle linéaire ou ramifié comportant 1 à 8 atomes de C qui présente éventuellement des hétéroatomes ;
R²³ représentant un atome d'hydrogène ou un groupe alkyle comportant 1 à 8 atomes de C ou un groupe alcoxy linéaire ou ramifié comportant 1 à 8 atomes de C ;
R²⁴ représentant un radical alkyle linéaire ou ramifié comportant 2 à 20 atomes de C ; et
n représentant une valeur de 1 ou de 2.

6. Composition selon l'une quelconque des revendications précédentes, **caractérisée en ce que** le composé qui présente au moins un groupe amidino est un composé de formule (IX) 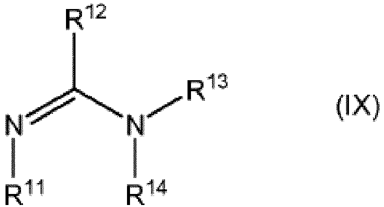
R¹¹ représentant un atome d'hydrogène, un radical hydrocarboné monovalent comportant 1 à 10 atomes de C ou, conjointement avec R¹⁴, représentant un radical hydrocarboné divalent éventuellement substitué comportant 1 à 10 atomes de C ;
R¹² représentant un atome d'hydrogène, un radical hydrocarboné monovalent comportant 1 à 12 atomes de C, éventuellement comportant des parties cycliques ou aromatiques, et éventuellement comportant un ou plusieurs hétéroatomes, représentant un groupe amino ou, conjointement avec R¹³, représentant un radical hydrocarboné divalent éventuellement substitué comportant 1 à 10 atomes de C ;
R¹³ représentant un atome d'hydrogène, un radical hydrocarboné monovalent comportant 1 à 12 atomes de C, éventuellement comportant des parties cycliques ou aromatiques, et éventuellement comportant un ou plusieurs hétéroatomes, ou, conjointement avec R¹², représentant un radical hydrocarboné divalent éventuellement substitué comportant 1 à 10 atomes de C ; et
R¹⁴ représentant un atome d'hydrogène, un radical hydrocarboné monovalent comportant 1 à 10 atomes de C ou, conjointement avec R¹¹, représentant un radical hydrocarboné divalent éventuellement substitué comportant 1 à 10 atomes de C.

7. Composition selon l'une quelconque des revendications précédentes, **caractérisée en ce que** le composé qui présente au moins un groupe amidino est une guanidine, un imidazole, une imidazoline, une amidine bicyclique ou un dérivé de ces composés.

8. Composition selon l'une quelconque des revendications précédentes, **caractérisée en ce que** la composition comprend moins de 0,06 % en poids d'étain ou de composés organiques de l'étain.

9. Composition selon l'une quelconque des revendications précédentes, **caractérisée en ce que** la composition ne comprend aucun ingrédient qui libère du méthanol lors du durcissement.

10. Composition selon l'une quelconque des revendications précédentes, **caractérisée en ce que** la proportion du catalyseur est de 0,1 à 10 % en poids, en particulier 0,2 à 4 % en poids, préférablement 0,3 à 3 % en poids, de la composition totale.

11. Utilisation d'une composition selon l'une quelconque des revendications précédentes en tant qu'adhésif, agent d'étanchéité ou en tant que revêtement.
